# DEMANDE DE BREVET EUROPEEN

(11) **EP 3 502 988 A1**
(43) Date de publication de la demande: **26.06.2019**
(21) Numéro de dépôt: 18215576.2
(22) Date de dépôt: 21.12.2018
(51) Int. Cl.: G06Q 10/10

(54) **PROCÉDÉ DE CATÉGORISATION PAR APPRENTISSAGE DE TICKETS D'INCIDENT, SYSTÈME DE CATÉGORISATION ET PRODUIT PROGRAMME D'ORDINATEUR ASSOCIÉS**

(30) Priorité: 22.12.2017 FR 1701358
(71) Demandeur: Thales, 92400 Courbevoie (FR)
(72) Inventeur: QUILLET, Sébastien, 59832 LAMBERSART CEDEX (FR); AGOU, Jonathan, 59832 LAMBERSART CEDEX (FR); CARON, Pierre-Edouard, 59832 LAMBERSART CEDEX (FR)
(74) Mandataire: Lavoix

(57) **Abrégé**

Cette invention concerne un procédé de catégorisation par apprentissage de tickets d'incident, comprenant les étapes de réception (110) d'un ticket d'incident à traiter, de formatage (120) textuel du ticket d'incident à traiter, de représentation (130) du ticket d'incident à traiter sous la forme d'un vecteur descriptif obtenu par vectorisation de ce ticket d'incident par rapport à un corpus de classification, de génération (140) automatique des informations de catégorisation relatives à la catégorisation du ticket d'incident à traiter dans une ou plusieurs catégories, de transmission (150) à une personne responsable, des informations de catégorisation du ticket d'incident à traiter, et de réception (160) des informations de catégorisation du ticket d'incident à traiter, validées ou modifiées par la personne responsable.

## Description

La présente invention concerne un procédé de catégorisation par apprentissage de tickets d'incident.

La présente invention concerne également un système de catégorisation et un produit programme d'ordinateur associés.

L'invention concerne ainsi le domaine de traitement des tickets d'incident issus d'outils, dits « outils de ticketing », disponibles sur le marché.

De manière connue en soi, un ticket d'incident comporte une description textuelle de l'incident saisie manuellement par un opérateur qui constate lui-même l'incident ou le retranscrit pour le compte d'une tierce personne ayant constaté un tel incident. Un ticket d'incident peut être également saisi directement par un utilisateur ayant constaté un incident.

Habituellement, le rédacteur du ticket doit en outre définir une catégorie applicable à l'incident décrit afin que celui-ci soit pris en charge par un expert du domaine adéquat pour la résolution rapide et efficace.

Une telle étape de catégorisation manuelle de l'incident est basée sur une analyse sémantique et syntaxique de la description de l'incident.

La catégorisation correcte d'un incident étant un critère clé pour le traitement de celui-ci, le rédacteur du ticket doit extraire de la description textuelle de l'incident les informations les plus pertinentes afin d'établir rapidement le domaine et le sous-domaine d'appartenances de l'incident Outre l'analyse sémantique du contenu du texte descriptif de l'incident, le rédacteur peut se baser sur la présence ou non de certains « mots clés » pour effectuer son analyse et catégoriser au plus juste l'incident.

On conçoit alors que la catégorisation automatique des incidents permettrait de simplifier considérablement la charge du rédacteur du ticket.

Dans l'état de la technique, plusieurs méthodes proposent d'assurer un traitement au moins partiellement automatique des tickets d'incident.

Toutefois, un nombre important de ces méthodes concernent la gestion dynamique de l'accès à des dispositifs dans le cadre de la résolution d'incidents et non spécifiquement la problématique de catégorisation automatique des tickets en vue de leur affectation à un expert du domaine de l'incident.

Généralement, ces méthodes cherchent à déterminer le type d'incident, ce qui communément dans l'état de l'art consiste à établir s'il s'agit d'un incident proprement dit, d'un problème, d'une demande de services ou d'informations. Cela est fait par exemple dans le but de corréler ce type avec des paramètres d'accès et non de déterminer une catégorisation plus complexe du ticket.

On conçoit alors que les méthodes de traitement de l'état de la technique ne permettent pas de catégoriser les tickets d'incidents selon une catégorisation à plusieurs niveaux consistant par exemple à catégoriser un ticket d'incident selon une catégorie principale et une sous-catégorie de cette catégorie principale. De plus, ces méthodes sont parfois difficilement adaptables à des nouveaux types d'incident et/ou à des nouvelles catégories de ces incidents.

La présente invention a pour but de proposer une catégorisation automatique des tickets d'incident permettant de catégoriser ces tickets selon une structure complexe, présentant par exemple plusieurs niveaux de catégories, tout en étant facilement adaptable à des nouveaux types d'incident et/ou à des nouvelles catégories de ces incidents.

À cet effet, l'invention a pour objet un procédé de catégorisation par apprentissage de tickets d'incident pour un service de support d'utilisateurs, comprenant les étapes suivantes :
- réception d'un ticket d'incident à traiter comprenant une description textuelle d'un incident, la description textuelle étant formée d'une pluralité de mots ;
- formatage textuel du ticket d'incident à traiter ;
- représentation du ticket d'incident à traiter sous la forme d'un vecteur descriptif obtenu par vectorisation de ce ticket d'incident par rapport à un corpus de classification, le corpus de classification étant formé des mots distincts des descriptions textuelles de l'ensemble des tickets d'incident précédemment traités ;
- génération automatique des informations de catégorisation relatives à la catégorisation du ticket d'incident à traiter dans une ou plusieurs catégories, en utilisant une base d'apprentissage comprenant des tickets d'incident précédemment traités et des informations de catégorisation relatives à la catégorisation de ces tickets d'incident ;
- transmission à une personne responsable, des informations de catégorisation du ticket d'incident à traiter ;
- réception des informations de catégorisation du ticket d'incident à traiter, validées ou modifiées par la personne responsable et stockage de ces informations dans la base d'apprentissage avec le ticket d'incident à traiter.

Suivant d'autres aspects avantageux de l'invention, le procédé comprend une ou plusieurs des caractéristiques suivantes, prise(s) isolément ou suivant toutes les combinaisons techniquement possibles :
- le formatage du ticket d'incident à traiter comprend une ou plusieurs des actions suivantes :
   + suppression de la description textuelle correspondante des caractères spéciaux et des mots non-significatifs ;
   + lemmatisation de chaque mot de la description textuelle correspondante ;
   + remplacement de données sensibles de la description textuelle correspondante ;
- la dimension de chaque vecteur descriptif correspond au nombre total des mots uniques du corpus de classification ;
- chaque ligne de chaque vecteur descriptif correspond à un mot unique du corpus de classification, la valeur de cette ligne représentant le nombre d'occurrence du mot unique correspondant à cette ligne dans la description textuelle du ticket d'incident représenté par ce vecteur descriptif ;
- le ticket d'incident à traiter est catégorisé dans une catégorie, dite principale, et dans une sous-catégorie de cette catégorie principale ;
- la génération automatique des informations de catégorisation relatives à la catégorisation du ticket d'incident à traiter comprend la projection du vecteur descriptif représentant le ticket d'incident à traiter dans un espace cartésien à dimension inférieure à celle de ce vecteur descriptif ;
- la génération automatique des informations de catégorisation relatives à la catégorisation du ticket d'incident à traiter comprend en outre :
   + calcul d'un indice de confiance d'appartenance de ce ticket d'incident à chaque catégorie en utilisant une fonction de classification associée à chacune des catégories et le vecteur descriptif de ce ticket d'incident, une fonction de classification étant déterminée pour chaque catégorie en utilisant les tickets d'incident catégorisés dans cette catégorie de la base d'apprentissage ;
   + comparaison des indices de confiances calculés ;
- la mise à jour du corpus de sélection mise en oeuvre après le stockage dans la base d'apprentissage des informations de catégorisation validées ou modifiées avec le vecteur descriptif du ticket d'incident à traiter ;
- la base d'apprentissage comprend en outre les vecteurs descriptifs des tickets d'incident contenus dans cette base ;
- l'étape de stockage des informations de catégorisation du ticket d'incident à traiter comprend outre le stockage dans la base d'apprentissage du vecteur descriptif du ticket d'incident à traiter.

L'invention a également pour objet un produit programme d'ordinateur comportant des instructions logicielles qui, lorsque mises en oeuvre par un équipement informatique, mettent en oeuvre le procédé tel que défini précédemment.

L'invention a également pour objet un système de catégorisation par apprentissage de tickets d'incident pour un service de support d'utilisateurs, comprenant des moyens techniques configurés pour mettre en oeuvre le procédé tel que défini plus haut.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système de catégorisation selon l'invention ;
- la figure 2 est un organigramme d'un procédé de catégorisation selon l'invention, le procédé étant mis en oeuvre par le système de catégorisation de la figure 1.

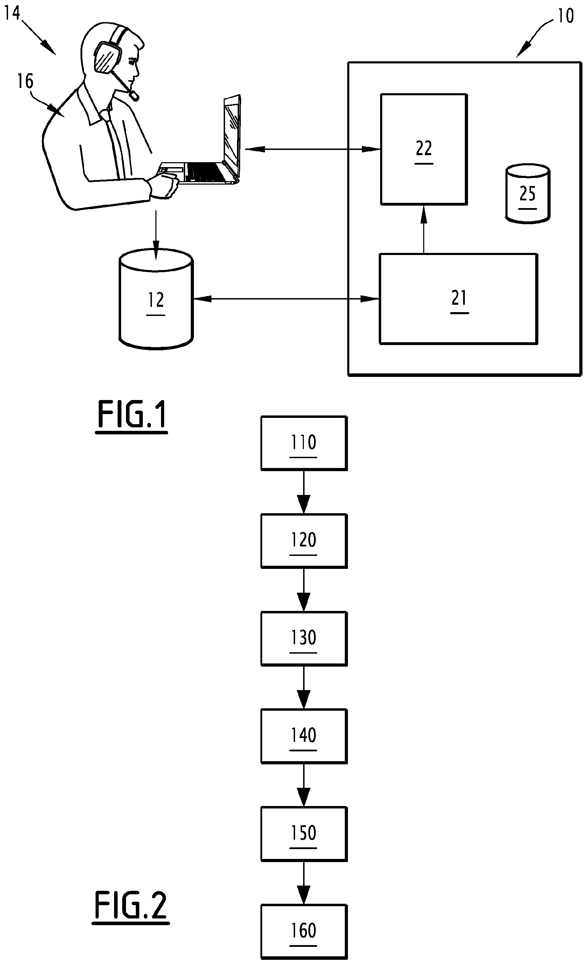

Dans l'exemple décrit, le système de catégorisation 10 de la figure 1 permet de catégoriser des tickets d'incident stockés dans une base de tickets 12. En particulier, ce système permet de catégoriser chacun de ces tickets dans N catégories, où le nombre N est un nombre entier supérieur à 1.

Selon un exemple particulier de réalisation, le système 10 permet de catégoriser chacun des tickets dans une catégorie, dite principale, et dans une sous-catégorie de la catégorie principale. Ces catégories sont par exemple toutes prédéterminées ou pour au moins certaines d'entre elles, sont créées au cours d'exploitation du système 10.

Chaque catégorie comporte un identifiant permettant de l'identifier de manière unique parmi les autres catégories.

Les tickets d'incident stockés dans la base de tickets 12 sont par exemple créés par un service de support d'utilisateurs 14 comprenant au moins un opérateur 16. En particulier, comme connu en soi, chaque ticket d'incident comprend une description textuelle de l'incident qui a été saisie par l'opérateur 16 via une interface homme-machine adaptée. Cette saisie est effectuée à la suite par exemple d'une demande correspondante d'un utilisateur. Chaque description textuelle est composée de mots.

Selon d'autres exemples de réalisation, chaque ticket d'incident est créé par l'opérateur 16 à la suite de son propre constat ou directement par un utilisateur via des outils dédiés.

Ainsi, par la suite, le terme « personne responsable » désignera l'opérateur 16 ou un utilisateur ou toute autre personne en charge de la rédaction ou de la validation du ticket correspondant selon les cas.

Il est à noter que le terme « incident » au sens de la présente invention est utilisé pour désigner tout problème ou toute demande provenant d'un utilisateur ou d'un opérateur. Il peut donc désigner un incident proprement dit, un problème, ou bien une demande de services ou d'informations.

Selon différents exemples de réalisation, la base de tickets 12 se présente sous la forme d'un espace de stockage informatique connecté au service 14 et au système 10 via des moyens informatiques adaptés, ou alors sous la forme d'un simple tampon de stockage entre le service 14 et le système 10.

Le système de catégorisation 10 comprend un module de prétraitement 21, un module d'apprentissage 22 et une base d'apprentissage 25.

Chacun de ces modules 21, 22 se présente au moins partiellement sous la forme d'un ou de plusieurs logiciels exécutables par un processeur faisant partie du système 10 et stockés dans une mémoire adaptée qui est également comprise dans le système 10.

Dans ce cas, le système 10 est un calculateur disposé par exemple de manière distante de la base de tickets 12 et du service de support 14, et connecté à ceux-ci par des moyens informatiques adaptés.

Dans une variante, les logiciels correspondant aux modules 21, 22 sont stockés dans des calculateurs éventuellement différents et sont exécutables par ces calculateurs qui sont éventuellement distants l'un par rapport à l'autre.

Selon un exemple de réalisation, au moins certaines parties des modules 21, 22 se présentent sous la forme des éléments physiques tels que par exemple des circuits programmables.

Le module de prétraitement 21 est configuré pour récupérer des tickets d'incidents de la base de tickets 12 et pour les formater comme cela sera expliqué par la suite.

Le module d'apprentissage 22 est configuré pour catégoriser chaque ticket d'incident formaté par le module de prétraitement 21 en utilisant notamment la base d'apprentissage 25.

Le module d'apprentissage 22 est configuré en outre pour communiquer des informations de catégorisation relatives à la catégorisation de chaque ticket d'incident catégorisé, à la personne responsable 16, et pour récupérer des informations validées ou modifiées par cette personne responsable 16.

La base d'apprentissage 25 présente par exemple une base de données de type SQL, un fichier plat, des données regroupées en mémoire vive RAM, etc...

La base d'apprentissage 25 comprend des informations relatives aux catégories prédéterminées et notamment le nombre total de ces catégories ainsi que les identifiants de ces catégories.

La base d'apprentissage 25 comprend en outre un fichier ou toute autre structure adaptée définissant un corpus de classification.

Le corpus de classification est formé des mots distincts des descriptions textuelles de l'ensemble des tickets d'incident traités par le système 10, comme cela sera expliqué par la suite.

La base d'apprentissage 25 comprend en outre des tickets d'incident traités par le système 10, éventuellement les vecteurs descriptifs correspondants, et des informations de catégorisation relatives à la catégorisation de ces tickets d'incident.

En particulier, le vecteur descriptif d'un ticket d'incident est un vecteur composé de nombres entiers, de préférence non-négatifs, dont la dimension correspond au nombre total des mots uniques du corpus de classification et dont chaque ligne correspond à un mot unique de ce corpus de classification.

La valeur de chaque ligne de ce vecteur représente le nombre d'occurrences du mot unique du corpus de classification correspondant à cette ligne dans la description textuelle du ticket d'incident représenté par ce vecteur descriptif. Lorsqu'un mot du corpus de classification n'apparait pas dans la description textuelle correspondante, la valeur de la ligne du vecteur descriptif correspondant à ce mot, est égale à zéro.

Les informations de catégorisation relatives à la catégorisation d'un ticket d'incident traité par le système 10 comprennent par exemples l'identifiant de chaque catégorie dans laquelle ce ticket d'incident est catégorisé. Il peut par exemple s'agir de l'identifiant d'une catégorie principale et de l'identifiant d'une sous-catégorie dans lesquelles le ticket d'incident correspondant est catégorisé.

L'ensemble des données stockées dans la base d'apprentissage 25 sont par exemple obtenues par le procédé de catégorisation décrit ci-dessous pour plusieurs tickets d'incident de test.

Selon une variante, ces données sont mises dans la base d'apprentissage 25 préalablement à la mise en oeuvre de ce procédé et sont déterminées par tout autre moyen technique.

Ainsi, les informations de catégorisation stockées dans la base d'apprentissage 25 présentent des informations certaines dans la mesure où elles ont été validées par une personne responsable par exemple lors de l'étape 150 du procédé décrit ci-dessous ou ont été déterminées par tout autre moyen lors de l'analyse des tickets d'incident de test.

Le procédé de catégorisation mis en oeuvre par le système de catégorisation 10 sera désormais expliqué en référence à la figure 2 présentant un organigramme de ses étapes.

Ce procédé est décrit en relation avec un seul ticket d'incident à traiter. Toutefois, dans le cas général, il doit être compris que les étapes décrites ci-dessous permettent de traiter plusieurs tickets d'incident de manière consécutive ou parallèle.

Initialement, le ticket d'incident à traiter est mis dans la base de ticket 12 par la personne responsable 16 qui était en charge de sa création.

Lors de l'étape initiale 110 du procédé, le module de prétraitement 21 reçoit le ticket d'incident à traiter qui lui est alors transmis par la base 12.

Lors de l'étape suivante 120, le module de prétraitement 21 effectue un formatage textuel du ticket d'incident à traiter.

En particulier, ce formatage comprend au moins certaines des actions suivantes :
- suppression de la description textuelle correspondante des caractères spéciaux et des mots non-significatifs ;
- lemmatisation de chaque mot de la description textuelle correspondante ;
- remplacement de données sensibles de la description textuelle correspondante.

La suppression des caractères spéciaux comprend par exemple la suppression des signes de ponctuation ainsi que des caractères non-imprimables.

La suppression des mots non-significatifs comprend notamment la suppression des articles et d'autres mots non-déterminants pour l'analyse, comme par exemple les prépositions.

La lemmatisation des mots correspond à la représentation de ces mots sous leur forme canonique, c'est-à-dire sous la forme figurant dans un dictionnaire de la langue correspondante.

Le remplacement de données sensibles consiste notamment en remplacement de tout mot présentant un élément critique (tel que par exemple le numéro d'une carte bancaire) par un élément équivalent dépourvu de toute valeur intrinsèque. Un tel élément est appelé « token » dans l'état de la technique et la technique de remplacement correspondante « tokenisation ».

Tous ces types de formatage sont effectués par des techniques connues en soi.

Le formatage du ticket d'incident effectué lors de cette étape modifie donc la description textuelle du ticket d'incident en la rendant plus courte et concise pour un traitement informatique.

Lors de l'étape suivante 130, le module de prétraitement 21 génère un vecteur descriptif du ticket d'incident.

Ce vecteur descriptif est généré par rapport au corpus de classification de la base d'apprentissage 25.

En particulier, comme expliqué précédemment, la dimension n de ce vecteur descriptif correspond au nombre total des mots uniques du corpus de classification et chaque ligne de ce vecteur correspond au nombre d'occurrences du mot du corpus de classification associé à cette ligne, dans la description textuelle du ticket d'incident.

À la fin de cette étape 130, le module de prétraitement 21 transmet le vecteur descriptif généré au module d'apprentissage 22.

Lors de l'étape 140 suivante, le module d'apprentissage 22 génère des informations de catégorisation relatives à la catégorisation du ticket d'incident à traiter. Comme décrit précédemment, ces informations de catégorisation comprennent par exemple l'identifiant de la catégorie principale et l'identifiant de la sous-catégorie dans lesquelles le ticket d'incident à traiter doit être catégorisé selon le module d'apprentissage 22.

Pour ce faire, le module d'apprentissage 22 détermine d'abord une projection du vecteur descriptif du ticket d'incident à traiter (si nécessaire) dans un espace cartésien de dimension inférieure à n. Cette projection s'effectue, par exemple par l'algorithme d'analyse par composantes principales, de sorte qu'elle corresponde à la variance maximale.

Puis, le module d'apprentissage 22 calcule un indice de confiance d'appartenance du vecteur descriptif à chacune des N catégories.

Pour ce faire, le module d'apprentissage 22 calcule la valeur d'une fonction de classification associée préalablement à chacune des catégories. Cette fonction évalue le degré d'appartenance de celui-ci à la zone vectorielle délimitée par l'ensemble des vecteurs des tickets d'apprentissage de la catégorie évaluée (par l'utilisation, par exemple, d'un séparateur à vaste marge).

Finalement, le module d'apprentissage 22 catégorise le ticket d'incident à traiter dans les catégories dont les fonctions de catégorisation ont donné les indices de confiances les plus élevés. Dans l'exemple décrit, il s'agit alors d'une catégorie principale et d'une sous-catégorie de cette catégorie principale.

Lors de l'étape 150 suivante, le module d'apprentissage 22 transmet les informations de catégorisation générées à la personne responsable 16.

Lors de cette étape, la personne responsable 16 reçoit alors ces informations de catégorisation et les valide si elles correspondent à la réalité ou les modifie dans le cas contraire.

Puis, la personne responsable 16 transmet ces informations à la base de tickets 12 pour qu'elles soient stockées avec le ticket d'incident correspondant. Ce ticket est ensuite attribué à un expert déterminé en fonction des informations de catégorisation correspondantes.

La personne responsable 16 transmet également les informations de catégorisation validées ou modifiées au module d'apprentissage 22.

Lors de l'étape 160 suivante, le module d'apprentissage 22 reçoit les informations de catégorisation validées ou modifiées par la personne responsable 16 et stocke ces informations dans la base d'apprentissage 25 avec le ticket correspondant et éventuellement son vecteur descriptif.

Cette étape correspond alors à l'apprentissage effectué par le module d'apprentissage 22 dans la mesure où la catégorisation de chaque prochain ticket d'incident sera effectuée en fonction entre autres, des informations de catégorisation validées ou modifiées par la personne responsable 16 relatives à la catégorisation du ticket d'incident courant.

Éventuellement, lors de cette étape, le module d'apprentissage 22 met à jour le corpus de classification. Cela est notamment fait lorsque la description textuelle du ticket d'incident correspondant comporte des mots non-existants dans ce corpus. Dans ce cas, le module d'apprentissage 22 effectue une boucle d'apprentissage sur l'ensemble des tickets de la base d'apprentissage pour prendre en compte la nouvelle taille du corpus. En particulier, lors de cette boucle, des nouveaux vecteurs descriptifs sont générées pour prendre en compte la nouvelle taille du corpus.

Bien entendu, d'autres modes de réalisation sont également possibles.

On conçoit alors que l'invention présente un certain nombre d'avantages.

Tout d'abord, la catégorisation automatique mise en oeuvre par le procédé s'effectue de manière indépendante du nombre des catégories ainsi que de leur lien l'une par rapport à l'autre. Ceci permet notamment de catégoriser les tickets d'incident selon une structure de caractérisation relativement complexe.

En outre, le taux de catégorisation correcte des tickets d'incident obtenu par l'utilisation de l'invention est meilleur par rapport aux méthodes existantes car il augmente avec le temps grâce à l'auto-enrichissement continu de la base d'apprentissage avec les tickets d'incident traités. Ce taux s'améliore donc avec le temps.

En outre, l'effort de formation des nouveaux opérateurs du service de support est moindre car pour catégoriser un ticket d'incident, le système selon l'invention propose déjà une solution qui peut être validée ou modifiée.

Finalement, l'augmentation du taux de bonne catégorisation des tickets facilite le traitement des tickets car ils sont de suite affectés aux personnes ayant les capacités adaptées à leur résolution.

## Revendications

1. Procédé de catégorisation par apprentissage de tickets d'incident pour un service de support d'utilisateurs (14), comprenant les étapes suivantes :
- réception (110) d'un ticket d'incident à traiter comprenant une description textuelle d'un incident, la description textuelle étant formée d'une pluralité de mots ;
- formatage (120) textuel du ticket d'incident à traiter ;
- représentation (130) du ticket d'incident à traiter sous la forme d'un vecteur descriptif obtenu par vectorisation de ce ticket d'incident par rapport à un corpus de classification, le corpus de classification étant formé des mots distincts des descriptions textuelles de l'ensemble des tickets d'incident précédemment traités ;
- génération (140) automatique des informations de catégorisation relatives à la catégorisation du ticket d'incident à traiter dans une ou plusieurs catégories, en utilisant une base d'apprentissage (25) comprenant des tickets d'incident précédemment traités et des informations de catégorisation relatives à la catégorisation de ces tickets d'incident ;
- transmission (150) à une personne responsable (16), des informations de catégorisation du ticket d'incident à traiter ;
- réception (160) des informations de catégorisation du ticket d'incident à traiter, validées ou modifiées par la personne responsable (16) et stockage de ces informations dans la base d'apprentissage (25) avec le ticket d'incident à traiter.

2. Procédé selon la revendication 1, dans lequel le formatage (120) du ticket d'incident à traiter comprend une ou plusieurs des actions suivantes :
- suppression de la description textuelle correspondante des caractères spéciaux et des mots non-significatifs ;
- lemmatisation de chaque mot de la description textuelle correspondante ;
- remplacement de données sensibles de la description textuelle correspondante.

3. Procédé selon la revendication 1 ou 2, dans lequel :
- la dimension de chaque vecteur descriptif correspond au nombre total des mots uniques du corpus de classification ; et
- chaque ligne de chaque vecteur descriptif correspond à un mot unique du corpus de classification, la valeur de cette ligne représentant le nombre d'occurrence du mot unique correspondant à cette ligne dans la description textuelle du ticket d'incident représenté par ce vecteur descriptif.

4. Procédé selon l'une quelconque des revendications précédentes, dans lequel le ticket d'incident à traiter est catégorisé dans une catégorie, dite principale, et dans une sous-catégorie de cette catégorie principale.

5. Procédé selon l'une quelconque des revendications précédentes, dans lequel la génération (140) automatique des informations de catégorisation relatives à la catégorisation du ticket d'incident à traiter comprend la projection du vecteur descriptif représentant le ticket d'incident à traiter dans un espace cartésien à dimension inférieure à celle de ce vecteur descriptif.

6. Procédé selon l'une quelconque des revendications précédentes, dans lequel la génération (140) automatique des informations de catégorisation relatives à la catégorisation du ticket d'incident à traiter comprend en outre :
- calcul d'un indice de confiance d'appartenance de ce ticket d'incident à chaque catégorie en utilisant une fonction de classification associée à chacune des catégories et le vecteur descriptif de ce ticket d'incident, une fonction de classification étant déterminée pour chaque catégorie en utilisant les tickets d'incident catégorisés dans cette catégorie de la base d'apprentissage (25) ;
- comparaison des indices de confiances calculés.

7. Procédé selon l'une quelconque des revendications précédentes, comprenant en outre la mise à jour du corpus de sélection mise en oeuvre après le stockage dans la base d'apprentissage (25) des informations de catégorisation validées ou modifiées avec le vecteur descriptif du ticket d'incident à traiter.

8. Procédé selon l'une quelconque des revendications précédentes, dans lequel :
- la base d'apprentissage (25) comprend en outre les vecteurs descriptifs des tickets d'incident contenus dans cette base ;
- l'étape de stockage (160) des informations de catégorisation du ticket d'incident à traiter comprend outre le stockage dans la base d'apprentissage (25) du vecteur descriptif du ticket d'incident à traiter.

9. Produit programme d'ordinateur comportant des instructions logicielles qui, lorsque mises en oeuvre par un équipement informatique, mettent en oeuvre le procédé selon l'une quelconque des revendications précédentes.

10. Système de catégorisation (10) par apprentissage de tickets d'incident pour un service de support d'utilisateurs, comprenant des moyens techniques configurés pour mettre en oeuvre le procédé selon l'une quelconque des revendications 1 à 8.
